# EUROPÄISCHE PATENTANMELDUNG

(11) **EP 0 902 368 A1**
(43) Veröffentlichungstag der Anmeldung: **17.03.1999**
(21) Anmeldenummer: 97112696.6
(22) Anmeldetag: 23.07.1997
(51) Int. Cl.: G06F 11/14

(54) **Verfahren zum Wiederanlauf eines Rechnersystems**

(71) Anmelder: SIEMENS AKTIENGESELLSCHAFT, 80333 München (DE)
(72) Erfinder: Eggers, Harald Dr.rer.nat., 85256 Vierkirchen (DE); Schmelz, Manfred Dipl.-Ing.(FH), 82008 Unterhaching (DE); Schlag, Richard, 82110 Germering (DE); Niessen, Jürgen Dipl.-Phys., 83670 Bad Heilbrunn (DE); Bauer, Wolfgang Dr.rer.nat., 82266 Inning (DE)

(57) **Zusammenfassung**

In Vermittlungssystemen werden automatische Wiederanläufe von Teilen oder des gesamten Systems zur Neutralisierung von Software-Fehlern benutzt. Bei einem hart reproduzierbaren Fehler kann der Fehler durch obigen Mechanismus nicht neutralisiert werden. Der Erfindung löst dieses Problem durch einen einem Wiederanlaufmechanismus, der nur diejenige Software des Rechnersystems neu startet, die eine Betriebsfortsetzung des Rechnersystems mit reduzierter Funktionalität erlaubt.

## Beschreibung

In Rechnersystemen, insbesondere in Realzeitsystemen wie z.B. Vermittlungssystemen der Telekommunikationstechnik, sind standardmäßig Software-Maintenance-Mechanismen integriert, die Maßnahmen zur Neutralisierung von Software-Fehlern bereitstellen.

Diese Maßnahmen sind automatische Wiederanläufe von Teilen oder des gesamten Systems, wobei Daten, Betriebsmittel, Betriebssystemresourcen und der Code-Teil der Software (SW) selbst gestaffelt zurückgesetzt und neu initialisiert werden.

Automatische Wiederanlaufmaßnahmen sind in der Regel wie folgt gestaffelt:
1.Neustart eines einzelnen SW-Prozesses oder einer Gruppe von Prozessen mit Initialisierung seiner lokalen Daten.
2.Neustart aller Prozesse eines Prozessors (in Multiprozessor-Systemen) mit Initialisierung globaler Daten.
3.Synchronisierter Start aller SW-Prozesse eines Prozessors.
4.Systemweite Wiederanläufe mit synchronisierter Inbetriebnahme aller Prozessoren.
5.Systemweite Wiederanläufe mit synchronisierter Inbetriebnahme aller Prozessoren und Laden von Daten und Code.
6.Systemweite Wiederanläufe mit synchronisierter Inbetriebnahme aller Prozessoren verbunden mit einem Rückfall auf eine ältere im Gesamtsystem hochlauferprobte SW-Generation.

Dabei werden heute Fehler dadurch neutralisiert, daß bedingt durch die Initialisierung von Daten und die vielfältigen Programmzustände, die sich aus dem Code mit den zugehörigen Daten ergeben, rein statistisch diejenige Systemkonstellation (Daten und Code), die zum Fehler geführt hat, sich mittelfristig (d.h. bis zur Korrektur des SW-Fehlers im Feld z.B. mittels PATCH, der im Labor erarbeitet wird) nicht wieder einstellt.

Prinzipiell beinhaltet dieses Verfahren einen entscheidenden Mangel:
Bei schwerwiegenden Fehlern erfolgt immer eine Eskalation (Ausweitung des Wiederanlaufs) zu einer systemweiten Anlaufstufe, bei der generell die gesamte SW neu gestartet wird. D.h. auch die fehlerhafte SW ist nach wie vor im System enthalten und auch dynamisch aktiv. Handelt es sich um einen hart reproduzierbaren Fehler, so kann durch obigen Mechanismus der Fehler nicht neutralisiert werden. Liegt der Fehler auch schon in der älteren Rückfallgeneration vor, so rolliert das System und kommt aus eigener Kraft nicht wieder in einen aktiven Zustand.

Der Erfindung liegt die Aufgabe zugrunde, die genannten Nachteile zu vermeiden bzw. zu verringern.

Diese Aufgabe wird durch die Erfindung gelöst.

Im folgenden wird ein Ausführungsbeispiel der Erfindung anhand der Zeichnung näher erläutert, wobei die Zeichnung 2 Figuren umfaßt.

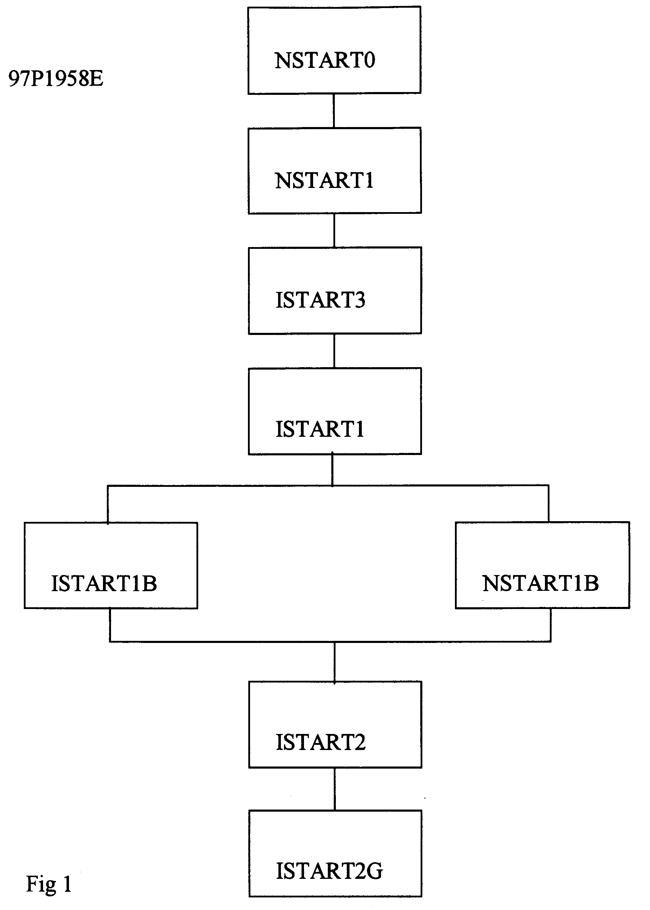

FIG 1 zeigt das Anlaufssystem, das in dem elektronischen digitalen Vermittlungssystem EWSD der Firma Siemens AG realisiert ist. Im folgenden werden die Komponenten des Anlaufsystems, die über eine statistische Fehlerbewertung automatisch angestoßen werden, näher erläutert.

Die durch die Komponenten durchgeführten Anlaufmaßnahmen gliedern sich in Neustarts NSTARTs und in Initialstarts ISTARTs. Die NSTARTs im Zentralprozessor bewirken ein zurücksetzen und neu starten aller oder/Gruppen von SW-Prozessen. Dies geschieht in zwei Stufen (NSTART0/1 und NSTART3), die sich in der Tiefe der Dateninitialisierung unterscheiden (siehe unten). Die Initialstarts setzen das gesamte System zurück und starten alle Prozessoren neu.

Eine Komponente bzw. Anlaufstufe NEUSTART0 (Abk.: NSTART0), die alle nicht-vermittlungstechnischen Prozesse im Koordinationsprozessor (CP) neu startet mit Initialisierung der lokalen Daten.

Eine Komponente bzw. Anlaufstufe NSTART1, die alle Prozesse im CP neu startet.

Eine Komponente bzw. Anlaufstufe NSTART3, die zusätzlich semipermanente Daten und Code vom Hintergrundspeicher nachlädt und transiente Daten im CP initialisiert.

Eine Komponente bzw. Anlaufstufe ISTART1, die zusätzlich die vermittlungstechnische Peripherie rücksetzt und reaktiviert.

Eine Komponente bzw. Anlaufstufe ISTART2, (die mächtigste Anlaufstufe in der aktuellen SW-Generation), die zusätzlich den Arbeitsspeicher im CP formatiert und die vermittlungstechnische Peripherie mit Daten nachlädt.

Bis hierher wird immer die aktuelle Systemgeneration geladen. Ist auch durch diesen Anlauf der Fehler nicht zu neutralisieren, so erfolgt ein Rückfall auf eine ältere (Code-)Generation.

Eine Komponente ISTART2G, die anstelle der aktuellen eine Rückfallgeneration lädt, lädt somit in die vermittlungstechnische Peripherie zusätzlich den neuen Code.

Es gibt nun eine Fehlerklasse, die durch diesen Eskalationsmechanismus nicht neutralisierbar ist: Befindet sich die fehlerhafte SW sowohl in der aktuellen wie auch in der Rückfall-SW-Generation, und arbeitet diese SW mit Daten, die sich in beiden Generationen nicht unterscheiden, so wird dieser Fehler bei jedem neuen Anlauf erneut provoziert. Beispiele aus dem Vermittlungssystem EWSD sind Plattendoppelfehler, HW-Fehler und harte SW-Fehler. Das mindeste in solchen Situaitionen war bisher ein Rückfall auf eine ältere Generation, wenn nicht ein rollierender Anlauf. Beides hat massive negative Auswirkungen auf den Betreiber (Entstörung ohne Indizien in einer Streß-Situation beim rollierenden Anlauf, Wiederherstellung der aktuellen SW-Version mit Aktualisierung der Datenbasis nach einem Rückfall auf eine ältere SW-Generation).

Die der Erfindung zugrundeliegende Idee ist es, sich bei Auftreten der genannten Fehler auf das Wesentliche eines Telekommunikations-Systems zurück zu besinnen: die ursprüngliche Funktion eines Vermittlungsrechners ist es, Gespräche zu vermitteln und Daten zu übertragen.

Basierend auf dieser Idee wird eine automatische Wiederanlaufstufe bzw. Wiederanlaufmaßnahme eingeführt, die nur noch vermittlungstechnisch relevante SW neu startet. Dadurch wird die fehlerhafte SW mit hoher Wahrscheinlichkeit ausgeblendet.

Näher betrachtet wird eine Anlaufstufe definiert, die nach dem ersten Initialstart des Systems (Hochlauf bis in den Normalbetrieb) in den Eskalationsmechanismus derart eingebettet wird, daß bei Erkennen eines Fehlers im Normalbetrieb automatisch mindestens ein Wiederanlauf durchgeführt wird, der zunächst versucht das Rechnersystem erneut in den Normalbetrieb zu überführen und erst wenn dies fehlschlägt (oder der Normabetrieb nicht stabil bleibt) der Hochlauf in den erfindungsgemäßen Betrieb, ab jetzt 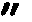 vermittlungstechnischer Basisbetrieb" genannt, erfolgt. Die zugehörige Komponente bzw. Anlaufstufe heißt ISTART1B. Bei diesem Hochlauf werden nur noch solche SW-Funktionen gestartet, die vermittlungstechnische Relevanz haben. Das System wird also nicht in den Normalbetrieb überführt, sondern in einen Zustand reduzierter Funktionalität.

Durch die gezielte Einbettung dieser Anlaufstufe in den Eskalationsmechanismus, nämlich reihenfolgemäßig vor eine Anlaufstufe mit Speicherformatierung, bietet dieser Mechanismus auch eine wirksame Maßnahme gegen Plattendoppelausfälle im System: Es wird von der im Speicher befindlichen SW nur der vermittlungstechnisch relevante Anteil neu gestartet, ohne daß SW und Init-Daten von Platte nachgeladen werden müssen. In diesem Fall wird auf eine Neustart-Stufe zurückgefallen, die die aktuellen Daten nicht mit Initialwerten überschreibt. Die zugehörige Komponente bzw. Anlaufstufe heißt NSTART1B.

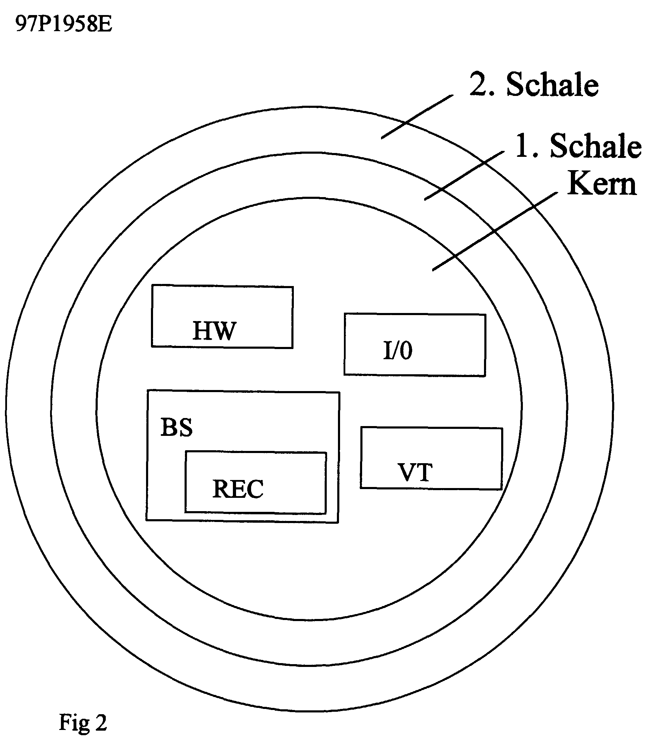

FIG 2 zeigt die Gliederung des Vermittlungssystems in Schalen um einen Kern.
Der Kern enthält Basis Input/Output-Funktionen I/O, vermittlungstechnische Prozesse mit vermittlungstechnischer Basis-Funktionalität VT und das Betriebssystem BS mit einem Wiederanlaufsystem REC, das anhand von FIG 1 bereits näher erläutert wurde. In einer 1. Schale um die Kernfunktionen liegen z.B. die Alarmierung im Wartungszentrum oder die Vergebührung mit AMA (Automatic Message Accounting = Einzelgebührennachweis). In einer 2. Schale werden Funktionen angeordnet, die zwar für vermittlungstechnisch spezifische Sonderaufgaben zuständig sind, die aber ohne große Einschränkung auf Betreiber und Endkunden weglaßbar sind (z.B. Operator Service Funktionen und Audits).

In einem ersten Versuch werden der Kern und beide Schalen aktiviert. Tritt statistisch innerhalb der Eskalationsübervachung erneut ein Fehler auf, so wird unter Weglassung jeweils der äußeren Schale der Anlauf wiederholt. Funktioniert auch das nicht, so liegt der Fehler innerhalb der Kernfunktionen. Dann muß in der Eskalation der nächste Schritt unternommen werden. Der schrittweise Rückfall auf die unterschiedlichen Schalen erfolgt jeweils durch einen neuen Anlauf ISTART1B, jeweils mit weiteren Reduktionen der zu aktivierenden Prozeßmenge.

Da es sich bei dem Vermittlungssystem EWSD um ein Multiprozessorsystem handelt, ist die genannte Wiederanlaufmaßnahme sowohl prozessorindividuell als auch systemweit durchführbar.

Weitere wesentliche Funktionen, die im Zusammenhang mit der genannten Wiederanlaufmaßnahme relevant sind, sind die Alarmierung, die Indiziensicherung, die Entstörung und die Rückführung in den Normalbetrieb.
- Die Alarmierung ermöglicht es dem Betreiber, die eingeschränkte Systemfunktionalität, d.h. den vermittlungstechnischen Basisbetrieb, zu erkennen und zu bewerten.
- Die Indiziensicherung stellt wesentliche Informationen zur Entstörung bereit (z.B. eine Basisbetriebs-Statusaussage, Informationen über den verursachenden SW-Fehler, eine Hochlaufbilanzierung über die Peripherie etc.). Diese Informationen werden sowohl am lokalen Bediengerät (unter Umgehung der Standard-Ausgabewege) als auch im Wartungszentrum ausgegeben. Ebenso werden Teilsystemausfälle wahrend des Zustandes 'Vermittlungstechnischer Basisbetrieb' mittels der Indiziensicherung ausgegeben.
- Die Entstörung macht Mechanismen verfügbar, die es zum einen erlauben, die Fehlersituation zu analysieren (im laufenden/aktiven System). Zum anderen bietet sie dem Betreiber eine Funktionalität zur Korrektur von SW-Fehlern im System (Standard im Normalbetrieb), die automatisch im Hintergrund bereitgestellt wird, sobald sie von dem Betreiber angefordert wird. D.h. der SW-Fehler kann im laufenden Betrieb des Systems in der reduzierten Funktionalität korrigiert werden.
   Mit Beginn der Entstörung wird der im Basisbetrieb aktivierte SW-Stand 'eingefroren'. D.h. ereignet sich während der Entstörung ein weiterer Fehler, so wird mit einem neuen Anlauf (ISTART1B oder NSTART1B) der vor Beginn der Entstörung eingestellte Zustand wiederhergestellt, da der neu aufgetretene SW-Fehler mit hoher Wahrscheinlichkeit auf die Entstörmaßnahmen zurückzuführen ist.
- Schließlich ist eine Rückführung vorhanden, die den Normalbetrieb wiederherstellt. Dies ist in der Regel eine der eingangs erwähnten standardmäßig verfügbaren Anlaufmaßnahmen, die für diesen Zweck manuell auslösbar sein muß.

Im folgenden werden Vorteile der Erfindung für den Betreiber und dessen Kunden näher erläutert.

Typischerweise können heute ca. 50% bis 80% der SW im steuernden Rechner weggelassen werden, ohne den Service eines Vermittlungssystems gegenüber dem Endkunden wesentlich einzuschränken. Somit sind auch etwa 50% bis 80% aller SW-Fehler, die durch Standardmaßnahmen nicht erfaßt werden, dadurch neutralisiert, daß die zugehörige SW in dieser Anlaufstufe nicht mehr aktiviert wird. Die genannte Relation wird in Zukunft noch besser werden, da bei weiterem Reifen und Verfeinern eines Vermittlungssystems der Anteil an Nicht-Call-Processing-SW schneller zunimmt als der Anteil an Call-Processing-SW.

Ein weiterer Punkt ist zu beachten:
Die Fehlerwahrscheinlichkeit ist in der SW nicht gleichverteilt. Die ca. 20% vermittlungstechnisch relevante SW ist sehr viel schneller fehlerfrei, da sie mit jedem Vermittlungsaufbau durchlaufen wird und nur wenige Sonderfälle zu beherrschen hat. Die anderen 80% kommen sehr viel seltener zum Ablauf, müssen deutlich komplexere Fehlerfälle beherrschen (z.B. die Behandlung von Mehrfachfehlern im System) und enthalten deswegen auch einen höheren Prozentsatz an Restfehlern, wenn die SW zum Kunden ausgeliefert wird.

Die Systemverfügbarkeit hat sich mit der Einführung dieses Features in EWSD deutlich verbessert. Die Total System Down Time, d.h. die Zeit, in der das System nicht verfügbar ist, wäre ohne den vermittlungstechnischen Basisbetrieb um ca. 50% höher. Konkret läge die TSDT ohne vermittlungstechnischen-Basisbetieb heute bei 1,5 min/VST/Jahr, mit vermittlungstechnischen Basisbetrieb beträgt sie unter 1 min/VST/Jahr.

Ein weiterer Nutzen für den Betreiber ergibt sich aus der Vermeidung des Rückfalls auf eine ältere SW-Generation. Damit entfällt das sehr komplexe, zeitaufwendige Roll Forward auf die aktuelle Generation. Gleichzeitig entfällt damit für den Betreiber der durch das Roll Forward verursachte Gebührenverlust.

Ein Rolling Recovery wird vermieden, d.h. das Vermittlungssystem steht den Telefonkunden für die standardmäßigen Aufgaben zur Verfügung (telefonieren, Notruf und Service verfügbar!).

Die Entstörung des Fehlers ist nicht mehr zeitkritisch. Sie kann mit Unterstützung des Herstellers (Fachpersonal in der Entwicklung) zur normalen Arbeitszeit erfolgen. Aus dem Feld gibt es Beispiele, wo sich der vermittlungstechnische Basisbetrieb Sonntags eingestellt hat, die Entstörung jedoch erst am Montag durchgeführt wurde.

## Patentansprüche

1. Rechnersystem,
**gekennzeichnet durch**
eine Wiederanlauf-Komponente (ISTART1B, NSTART1B), die nur diejenige Software neu startet, die eine Betriebsfortsetzung des Rechnersystems mit reduzierter Funktionalität erlaubt.

2. Rechnersystem, mit
einem Wiederanlaufmechanismus, der bei Auftreten eines Fehlers im Normalbetrieb zunächst mindestens ein Mal versucht, das Rechnersystem erneut in den Normalbetrieb zu überführen und wenn dies fehlschlägt oder der Normalbetrieb nicht stabil bleibt eine Wiederanlaufmaßnahme durchführt, die nur diejenige Software des Rechnersystems neu startet, die eine Betriebsfortsetzung des Rechnersystems mit reduzierter Funktionalität erlaubt.

3. Rechnersystem nach einem der Ansprüche 1 oder 2,
**dadurch gekennzeichnet**, daß
es sich bei dem Rechnersystem um ein Multiprozessorsystem handelt, bei dem die genannte Wiederanlaufmaßnahme prozessorindividuell erfolgen kann.

4. Rechnersystem nach einem der Ansprüche 1 bis 3,
**dadurch gekennzeichnet**, daß
es sich bei dem Rechnersystem um ein Vermittlungssystem handelt,
es sich bei den Software-Funktionen zum Basis-Betrieb des Systems um vermittlungstechnische Basis-Funktionen handelt.

5. Rechnersystem, das
a) in Schalen um einen Kern gegliedert ist, wobei
a1) der Kern die Hardware des Rechnersystems sowie Software-Funktionen, die für einen Basis-Betrieb des Systems erforderlich sind, umfaßt,
a2) um den Kern mindestens eine weitere Schale angeordnet ist, die weitere Software-Funktionen umfaßt, die für einen erweiterten Betrieb des Systems erforderlich sind,
b) einen Wiederanlauf-Mechanismus umfaßt, der den Wiederanlauf steuert, wobei dieser Mechanismus zunächst mindestens ein Mal versucht, den Kern und alle Schalen zu aktivieren und wenn dabei erneut ein Fehler auftritt unter Weglassung jeweils der äußersten Schale den Anlauf bzw. Aktivierungsversuch wiederholt.

6. Verfahren zum Wiederanlauf eines Rechnersystems, demgemäß nur diejenige Software neu gestartet wird, die einen Betriebsfortsetzung des Systems mit reduzierter Funktionalität (Basis-Betrieb) erlaubt.

7. Verfahren zur Entstörung des Zustandes reduzierter bzw. eingeschränkter Funktionalität, demgemäß der bei Beginn der Entstörung eingestellte SW-Umfang eingefroren wird und bei weiteren Störungen genau dieser SW-Umfang erneut aktiviert wird.

8. Verfahren nach Anspruch 7,
**dadurch gekennzeichnet**, daß
die für die Entstörung notwendigen SW-Funktionen (genau die des Normalbetriebs) automatisch im System aktiviert werden, und zwar erst zum Zeitpunkt der Entstörmaßnahme und nicht bereits im Hochlauf zum vermittlungstechnischen Basisbetrieb, ohne daß der Betreiber besondere Maßnahmen ergreifen muß.

9. Verfahren nach Anspruch 6 oder Anspruch 7,
**dadurch gekennzeichnet**, daß
bei Betriebsfortsetzung mit reduzierter Funktionalität und bei der Entstörung keine Gebühren verloren gehen.
